# FASCICULE DE BREVET EUROPEEN

(11) **EP 3 028 895 B1**
(45) Date de publication et mention de la délivrance du brevet: **27.09.2017**
(21) Numéro de dépôt: 15197074.6
(22) Date de dépôt: 30.11.2015
(51) Int. Cl.: B60P 1/00

(54) **DISPOSITIF D'ASSISTANCE AU DÉCHARGEMENT D'UNE REMORQUE DE TRANSPORT A TAPIS ENROULEUR**
HILFSVORRICHTUNG ZUM ENTLADEN EINES TRANSPORTANHÄNGERS MIT EINEM LAUFBAND
DEVICE TO ASSIST WITH UNLOADING A TRANSPORT TRAILER WITH ROLLER CONVEYOR

(30) Priorité: 05.12.2014 BE 201405104
(43) Date de publication de la demande: 08.06.2016
(73) Titulaire: Etablissements JOSKIN S.A., 4630 Soumagne (BE)
(72) Inventeur: JOSKIN, Victor, B-4633 MELEN (BE)
(74) Mandataire: Pronovem

(56) Documents cités:
- JP-B2- 5 328 228
- US-A- 3 498 482
- US-A1- 2011 142 585
- US-B1- 6 837 668

## Description

### Objet de l'invention

La présente invention concerne un dispositif d'assistance au déchargement d'une caisse de transport de produit en vrac ou en conditionnement, placée de manière fixe ou démontable sur une structure munie d'un train roulant généralement quelconque (pour route, hors route, chemin de fer, etc.), et dotée d'un tapis de fond enroulant, d'une paroi mobile, de préférence frontale, accompagnant la matière transportée lors de son déchargement et d'une baie de déchargement réalisée par un dispositif quelconque d'ouverture de la paroi opposée, de préférence arrière, de la caisse de transport.

### Etat de la technique

Divers dispositifs de déchargement d'une caisse de transport non basculante au moyen d'un tapis de fond enroulant transportant la charge de la caisse vers la baie de déchargement et entraînant la paroi mobile disposée du côté opposé à la baie de déchargement sont connus de l'état de la technique. Pareils dispositifs sont notamment décrits dans les documents US 3,498,482 A, DE 201 17 346 U1, EP 2 497 684 A1 et JP 5328228 B2.

Comme l'indique la succession des documents susmentionnés, le dispositif développé à travers ces diverses solutions successives souffre de différentes difficultés.

Déjà en 1968, le document US 3,498,482 A indique que les véhicules munis d'un tapis actif sur lequel une charge est transportée entre les parois latérales et d'une paroi frontale mobile associée au tapis se déplaçant avec ce dernier pendant le déchargement de la charge sont bien connus, mais que dans le cas d'une charge meuble ou composée de particules, les vibrations se produisant durant les trajets du véhicule compactent la charge, entraînant des difficultés de démarrage/déplacement du tapis et de la paroi mobile.

Le document US 3,498,482 A propose un dispositif dans lequel, d'une part, un tapis de fond, pouvant être enroulé autour d'un tambour actif disposé sous la baie de déchargement arrière, est lié à la paroi mobile opposée, elle-même liée à un(des) câble(s) de rappel actionné(s) par un treuil situé sous la caisse, et d'autre part, la structure de fond de caisse est pourvue de conduites d'injection d'air comprimé produit par un compresseur embarqué. La liaison tapis/paroi mobile/câble(s) de rappel est réalisée en sorte que l'arbre de liaison peut effectuer quasi un tour complet avant de provoquer le déplacement de la paroi mobile lorsque le dispositif est actionné dans un sens ou l'autre. Lors du déchargement, le tapis se déplace ainsi de quelques centimètres avant que la paroi mobile ne commence à l'accompagner, ce qui est sensé « secouer » la charge pour la décompacter; en outre, l'air comprimé injecté sous le tapis est sensé « soulever » ce dernier. L'ensemble est censé permettre de contrecarrer le blocage de la charge. Cependant, ce dispositif implique un assemblage complexe de production et distribution d'air comprimé, ainsi qu'une liaison fragile au niveau de l'arbre de connexion avant, les chocs de démarrage/arrêt étant très susceptibles d'endommager le tapis et/ou le(s) câble(s) de rappel.

Le document DE 201 17 346 U1 propose un dispositif radicalement différent. Dans ce document, plutôt que de tirer la paroi mobile à l'aide du tapis enroulant, on propose de déplacer le tapis en poussant la paroi frontale mobile au moyen d'un dispositif combinant chevalet de maintien/poussée, roulettes et vérins. Le tapis de fond, dont la longueur est légèrement supérieure à la longueur de la caisse, a une extrémité fixée à la paroi mobile et/ou au chevalet de maintien/poussée. Son extrémité opposée, tournant autour d'un tambour de renvoi disposé sous la baie de déchargement, est fixée à une ou plusieurs chaînes s'étendant vers l'avant, tournant autour d'un pignon frontal et dont l'autre extrémité est fixée au chevalet. Lorsque la paroi mobile est poussée vers l'arrière pour le déchargement, la ou les chaînes, tirée(s) par le chevalet, entraîne(nt)le tapis autour du tambour de renvoi arrière, ce qui a pour effet de décharger la matière. Le dispositif est en réalité essentiellement basé sur un chevalet d'assemblage complexe et très robuste, mû par un lourd et coûteux vérin télescopique contrecarrant par la force exercée le problème évoqué par US 3,498,482 A. La construction s'en trouve plus complexe, elle perd l'action avantageuse du vérin de poussée puisque celui-ci se borne en réalité à tirer le tapis via le(s) chaîne(s) de rappel. La solution au problème évoqué ne provient en réalité que de l'effet multiplicateur des deux dispositifs de renvoi, tambour arrière et pignon(s) avant, et de la distance qui les sépare.

Le document EP 2 497 684 A1, déjà proposé par l'inventeur, revient à un dispositif similaire à celui amélioré par US 3,498,482 A, comprenant un tapis enroulé sous la baie arrière, une paroi mobile fixée à l'extrémité avant du tapis, et un câble de rappel tiré autour d'une poulie frontale par un treuil placé sous la caisse. Pour contrecarrer le blocage éventuel de la matière transportée, EP 2 497 684 A1 propose un chevalet muni de roulettes se déplaçant sur des rails de guidage et des glissières synthétiques facilitant le glissement du tapis lors de son déplacement. Il apparaît cependant que ce dispositif reste insuffisant dans le cas de charges très lourdes pour lesquelles à la fois le système de puissance du tambour arrière d'enroulement du tapis et la structure du tapis elle-même devraient être excessivement renforcés.

Guidé par l'objectif d'augmenter le volume de chargement d'une caisse de transport routier munie d'un dispositif de convoyage de la cargaison pour charger et décharger celle-ci, le document JP 5328228 B2 propose de réduire la hauteur du dispositif de convoyage. Le dispositif de JP 5328228 B2 comprend primo un tapis dont une extrémité est fixée à un tambour placé sous la baie ouvrante et l'autre extrémité est fixée à une cloison mobile, secundo deux chaînes sans fin s'étendant d'un bout à l'autre de la surface de chargement, tertio une chaîne d'entraînement du tambour enrouleur de tapis située à une extrémité du tambour, et quarto, un arbre d'entraînement situé sous la baie ouvrante de la caisse, faisant partie d'un système de puissance unique situé sous l'extrémité arrière de la caisse de transport, et pouvant entraîner tant les chaînes parcourant la longueur de caisse que les chaînes d'entraînement du tambour enrouleur de tapis. La paroi mobile est également fixée aux chaînes sans fin parcourant la longueur de la caisse. Ces chaînes sont mises en mouvement par l'arbre d'entraînement afin de ramener la cloison mobile vers l'avant de la caisse pendant la phase de chargement de la cargaison, le tapis suivant alors librement la cloison pour transporter la cargaison vers l'avant. La chaîne d'entraînement du tambour enrouleur tourne alors en roue libre autour de l'arbre d'entraînement. Pour ramener la cargaison vers la baie ouvrante, le même arbre d'entraînement entraîne la chaîne d'entraînement du tambour enrouleur, lequel enroule alors le tapis, ce qui a pour effet de transporter la cargaison vers l'arrière, la cloison mobile suivant celle-ci et entraînant librement les chaînes parcourant la longueur de la caisse, ces chaînes tournant alors en roue libre autour de l'arbre d'entraînement. Pour basculer de l'entraînement de la chaîne de transmission du tambour aux chaînes d'entraînement de la paroi mobile, l'arbre d'entraînement coopère avec un ou plusieurs embrayages. Ces embrayages sont composés d'un palier central comportant des ergots mobiles et de deux couronnes latérales comportant des gorges oblongues de profondeur décroissante dans lesquels les ergots mobiles se déplacent. Selon le sens de rotation de l'arbre d'entraînement, les ergots sont poussés complètement vers l'une ou l'autre couronne latérale, entraînant la chaîne correspondante. Ce dispositif, clairement conçu pour offrir un encombrement réduit d'un convoyeur disposé dans une caisse de transport fermée, ne prévoit pas réellement de système de déblocage d'une charge en vrac, même si le temps de déplacement des ergots d'une couronne à l'autre peut avoir le même effet de secousse que le dispositif de US 3,498,482 A. L'expérience montre cependant que l'effet de secousse ne peut être suffisant que si la caisse peut basculer.

### Buts de l'invention

Dès lors, le but de l'invention est de proposer, pour les dispositifs de déchargement de caisse de transport par tapis convoyeur s'enroulant sous la baie de déchargement et entraînant une paroi mobile opposée chargée de retenir la matière transportée, un dispositif mixte permettant d'une part de ramener le dispositif de déchargement en position initiale pour le remplissage de la caisse et d'autre part d'assister le dispositif de déchargement, notamment en cas de charges lourdes et compactées.

De manière dépendante, l'invention a également pour but qu'elle puisse être installée dans une caisse dite « conique », c'est-à-dire dont l'écartement des parois latérales est plus important du côté de la baie de déchargement que du côté opposé, ce qui permet à la matière transportée de se décompacter au cours de son trajet vers la baie de déchargement.

### Principaux éléments caractéristiques de l'invention

Les objectifs précités sont atteints selon la présente invention en mettant en oeuvre une caisse de chargement intégrée, de manière démontable ou non, à un véhicule de transport principalement destiné aux matières en vrac, comprenant un fond de caisse, des parois latérales, une baie de déchargement optionnellement munie d'un dispositif obturateur quelconque (panneau ou volet mobile, au moins une porte battante, caisson basculant, etc.), une paroi mobile rigide apte à se déplacer, lors du déchargement, à partir d'une extrémité dite avant de la caisse (position initiale), opposée à la baie de déchargement se trouvant à l'extrémité dite arrière de la caisse, vers cette dernière (position finale), un tapis de fond essentiellement hermétique, uniforme, en matière souple, de préférence synthétique et dotée d'une haute résistance, et de longueur inférieure au double de la longueur utile comprise entre la baie de déchargement et ladite extrémité opposée.

Une première extrémité du tapis de fond opposée à la baie de déchargement est solidaire de la paroi mobile, une seconde extrémité de celui-ci est attachée à un tambour enrouleur disposé sous la baie de déchargement, le tambour enrouleur étant entraîné par un premier système de puissance autorisant la rotation inversée du tambour, l'enroulement du tapis de fond provoquant le déplacement concomitant de la paroi mobile qui lui est solidaire, entre ladite extrémité opposée et la baie de déchargement.

Ladite caisse est, selon l'invention, caractérisée en ce qu'elle présente une (ou plusieurs) chaîne(s) s'étendant autour d'un nombre correspondant (c'est-à-dire un ou plusieurs respectivement) de pignons de renvoi placés sur un axe transversal situé sous la baie de déchargement et de pignons d'entraînement placés sur un axe disposé sous l'extrémité opposée de la caisse, c'est-à-dire l'extrémité avant, est (sont) liée(s) à la paroi mobile au moyen d'une (ou plusieurs) pièce(s) de liaison et est (sont) entraînée(s) par un second système de puissance, connu en soi de l'homme de métier, par l'intermédiaire d'un engrenage actionnant le(s) pignon(s) d'entraînement.

De la sorte, la paroi mobile dispose, selon l'invention, de son propre dispositif d'entraînement, d'où il résulte un double avantage :
- pouvoir tirer la paroi mobile vers l'extrémité de la caisse opposée à la baie de déchargement et ainsi ramener le tapis sur l'aire de chargement pour initier une nouvelle phase de chargement, et
- a contrario, tirer la paroi mobile et l'extrémité correspondante du tapis vers la baie de déchargement et ainsi assister le tambour enrouleur dans son travail d'enroulement du tapis pour décharger la matière transportée, le tapis, et donc la charge transportée qu'elle supporte, étant alors tirés simultanément et de manière synchronisée dans le même sens par ses deux extrémités.

La force de traction fournie lors du déchargement est ainsi démultipliée par l'action combinée de l'enrouleur de tapis et de la rotation de la (ou des) chaîne(s). Ceci a pour effet de réduire l'effort de traction subi par le tapis et/ou de multiplier la force de déplacement imprimée en cas de charge lourde et/ou compactée.

L'invention diffère du document JP 5328228 B2 dans la mesure où, dans ce document, on enseigne que les chaînes liées au tapis de fond sont entraînées exclusivement dans le sens opposé à l'enroulement du tapis de déchargement, et ce afin de ramener la paroi mobile vers l'avant et permettre un nouveau chargement. L'entraînement du tapis et le mouvement inverse des chaînes sont des mouvements qui s'excluent mutuellement par l'utilisation d'un seul système de puissance et d'un embrayage qui permet de choisir l'un ou l'autre mouvement.

Des modes d'exécution particuliers comprennent en outre notamment les caractéristiques complémentaires suivantes, ensemble ou séparément :
- le second système de puissance est également apte à entraîner ladite chaîne dans le sens de rotation inverse au sens d'enroulement du tapis de fond pour dérouler ce dernier, en vue de ramener de manière synchronisée la paroi mobile et le tapis de fond vers ladite extrémité opposée à la baie de déchargement ;
- la structure de fond de caisse comprend une ou plusieurs tôles comportant à intervalle régulier des plis formant autant de vallées, chacune de ces vallées étant pourvue d'une pluralité d'orifices réalisés dans le fond de vallée ;
- la caisse comporte un chevalet tridimensionnel de guidage et maintien de la paroi mobile, disposé sur le côté de celle-ci non exposé à la charge transportée, s'écartant sur une certaine distance de la paroi mobile et s'étendant sur une certaine largeur à la base de la paroi mobile, muni de moyens de guidage comprenant une pluralité de roulettes, patins ou ergots tels que lesdits moyens de guidage se déplacent sur ou dans un canal de guidage ménagé dans la structure de fond de caisse ;
- le canal de guidage comprend au moins deux rails de guidage profilés présentant un interstice entre eux et agencés pour que, sur chacun de ces rails, roule une roulette supérieure à gorge et, sous chacun de ces rails, roule une roulette inférieure sans gorge ;
- la base de la paroi mobile est munie d'un joint racleur épousant le profil du fond de caisse ;
- la géométrie de caisse est conique, c'est-à-dire que l'écart entre les parois latérales s'amenuise à mesure qu'elles s'étendent depuis la baie de déchargement vers ladite extrémité opposée de la caisse ;
- la paroi mobile est garnie de joints synthétiques verticaux semi-souples assurant l'étanchéité de la caisse le long des parois latérales, quelle que soit la position de la paroi mobile ;
- la paroi mobile possède une structure constructive ouverte avec une couverture réalisée en matière polymère thermoplastique transparente ;
- chaque pièce de liaison supporte également au moins un axe de roulette de guidage inférieure ;
- la chaîne est solidarisée au chevalet tridimensionnel de guidage et maintien de la paroi mobile, une première extrémité de la chaîne étant fixée à un tendeur et une seconde extrémité étant fixée à la pièce de liaison ;
- chaque pièce de liaison comporte un dispositif de réglage pour ajuster la position verticale de la ou des roulettes de guidage inférieures ;
- le dispositif obturateur de la baie de déchargement comprend un panneau ou volet mobile, au moins une porte battante ou un caisson basculant ou est complété ou remplacé par un dispositif de déchargement secondaire spécifique de la matière transportée ;
- le dispositif de déchargement secondaire spécifique de la matière transportée est un système de rouleaux, avec optionnellement assiettes d'épandage, pour la distribution de fumiers, sables, chaux ou autre matière à structure granuleuse, un convoyeur de transbordement pour les récoltes de produits agricoles ou une turbine de projection pour la distribution de fourrage ou déchets verts compostés.

Un aspect complémentaire de l'invention concerne un procédé de déchargement d'une caisse de chargement à tapis de fond lié à une paroi mobile et à un tambour enrouleur, principalement destinée aux matières en vrac, comme décrit ci-dessus, caractérisé en ce que le déplacement du tapis de fond vers la baie de déchargement se produit de manière synchronisée à la fois sous l'action d'un premier système de puissance qui enroule le tapis de fond sur le tambour enrouleur, ledit tapis entraînant avec lui la paroi mobile qui lui est solidaire, et sous l'action d'un second système de puissance qui entraîne la rotation d'au moins une chaîne liée à la paroi mobile autour d'un pignon situé sous la baie de déchargement de la caisse et d'un pignon situé sous l'extrémité opposée de la caisse.

Avantageusement, le rappel du tapis de fond et de la paroi mobile vers l'extrémité de caisse opposée à la baie de déchargement se produit uniquement sous l'action du second système de puissance entraînant la rotation inversée de chaque chaîne liée à la paroi mobile autour de son pignon situé sous la baie de déchargement de la caisse et de son pignon situé sous l'extrémité opposée de la caisse.

Toujours avantageusement, l'enroulement du tapis de fond est successivement actionné et stoppé au moyen d'un dispositif de commutation des deux systèmes de puissance précités, la vitesse et la distance d'enroulement du tapis de fond étant réglés de manière fine et régulière au moyen d'un dispositif de régulation des deux systèmes de puissance précités.

### Brève description des figures

Un exemple de réalisation suivant l'invention est décrit à la suite avec plus de détails à l'aide des figures annexées montrant des vues générales et rapprochées d'une caisse de transport selon l'invention, une partie des éléments constitutifs de la caisse pouvant n'avoir pas été représentée afin d'améliorer la visibilité sur le dispositif (technique de « l'écorché »). Dans cet exemple, la paroi mobile est la paroi avant et la baie de déchargement, se trouvant à l'arrière de la caisse, est obturée au moyen d'un caisson basculant.

La Figure 1 montre un exemple de remorque comportant un dispositif suivant l'invention en position d'attente de chargement de vrac ou charge similaire. Le tapis de fond se trouve en position complètement déroulée et la paroi mobile se trouve en position frontale.
La Figure 2 montre la remorque comportant un dispositif suivant l'invention en début de phase de déchargement.
La Figure 3 montre les organes situés sous la baie de déchargement de la remorque.
La Figure 4 montre la remorque comportant un dispositif suivant l'invention à peu près à mi-chemin de la phase de déchargement.
La Figure 5 montre la remorque comportant un dispositif suivant l'invention en fin de phase de déchargement.
Les Figures 6, 7 et 8 montrent des vues de détail de l'avant de la remorque comportant un dispositif suivant l'invention.
La Figure 9 montre une vue d'ensemble de la remorque comportant un dispositif suivant l'invention, certains éléments constitutifs n'ayant pas été représentés ou ne l'ayant été que partiellement afin de distinguer les organes internes.
La Figure 10 montre un détail de la partie avant de la remorque comportant un dispositif suivant l'invention, certains éléments constitutifs n'ayant pas été représentés ou ne l'ayant été que partiellement afin de distinguer les organes internes.
La Figure 11 montre des exemples de mise en oeuvre complémentaires d'une remorque comportant un dispositif suivant l'invention, illustrant des dispositifs de déchargement divers.

L'invention est explicitée à la suite au moyen d'une description non limitative de certains éléments de détail.

### Description détaillée de l'invention

Les objectifs visés par l'invention sont atteints grâce à une caisse de transport fabriquée à partir d'une structure légère comprenant des parois latérales lisses de conception quelconque et un fond supporté par une série de traverses, elles-mêmes supportées par des longerons, lesquels peuvent faire partie du châssis porteur ou non selon que l'on conçoit la liaison de la caisse à son châssis porteur comme permanente ou non.

De préférence, le fond est constitué de tôles pourvues, à intervalle régulier, de vallées dans lesquelles sont réservés des orifices permettant l'évacuation des résidus éventuels qui auraient pu se glisser entre le fond et le tapis de fond.

De préférence également, les parois latérales s'écartent à mesure qu'elles se rapprochent de la baie de déchargement, formant une caisse dite « conique ».

Le fond est intégralement couvert d'un tapis réalisé dans une matière dont la souplesse autorise l'enroulement du tapis autour d'un tambour et dont la résistance est compatible avec la charge utile de la remorque augmentée de la masse d'une paroi mobile de caisse (voir plus bas) et les paramètres d'agressivité du type de charge envisagée. Ce tapis peut être réalisé d'une seule pièce ou de manière sectionnelle, l'important étant que le résultat assemblé assure la couverture étanche de la surface intégrale du fond de caisse et puisse être enroulé sous forme d'un cylindre de diamètre compact. La caisse de transport comporte en outre une baie de déchargement. Dans une forme préférée mais non exclusive de l'invention, cette baie est située à l'arrière par rapport au sens normal de marche du véhicule de traction et comporte un moyen d'obturation quelconque, par exemple un panneau ou caisson mobile, une porte ouvrante à un ou plusieurs battants, un volet ouvrant par un dispositif quelconque, etc.

A l'opposé de la baie de déchargement est disposée une paroi mobile qui n'est fixée que par sa base au tapis de fond, au moyen de dispositifs de fixation adaptés. Cette paroi mobile est pourvue d'un dispositif de guidage et de maintien. Dans une forme préférée de l'invention, ce dispositif de guidage et de maintien n'utilise pas les parois latérales de la caisse parce que celles-ci sont susceptibles de se déformer à la suite de l'agression des charges transportées et/ou des véhicules de manutention procédant au remplissage de la caisse, et parce que la partie supérieure des parois latérales devrait rester libre pour y disposer un système de bâchage. Néanmoins, pour assurer l'étanchéité de la paroi mobile le long des parois latérales, deux joints sont disposés le long des arêtes verticales de la paroi mobile. Ces joints sont constitués d'une matière, telle que par exemple le caoutchouc, suffisamment dure pour résister à l'inertie et à l'abrasion de la matière transportée lorsque celle-ci est déchargée et, en cas de caisse conique, suffisamment souple pour compenser l'écartement progressif des parois latérales, la largeur des joints étant prévue en conséquence.

Une forme possible du dispositif de guidage et de maintien de la paroi mobile est constituée d'un chevalet tridimensionnel disposé sur le côté de la paroi mobile qui n'est pas exposé à la charge transportée. La base s'étend plus ou moins largement à l'avant de la paroi pour guider celle-ci sur une plus ou moins grande largeur et elle s'étend de manière plus ou moins éloignée de la paroi pour soutenir la partie supérieure de celle-ci avec un angle d'appui permettant de maintenir la paroi dans sa position constructive, et de résister à la pression exercée sur la paroi mobile par la portion de la charge transportée qui lui est contiguë.

La base du chevalet est équipée de moyens de guidage qui se déplaceront sur ou dans un canal de guidage afin de guider le déplacement de la paroi mobile. Le canal de guidage est constitué par exemple de deux rails en forme de « L » inversé (tête en bas), disposés en vis-à-vis avec un écartement central par lequel passent les moyens de guidage à la base du chevalet. Ils sont disposés entre deux tôles de fond de caisse, de préférence légèrement écartés de ces dernières pour permettre l'évacuation des résidus éventuels.

Dans une forme d'exécution préférée permettant aussi de faciliter le déplacement de la paroi mobile, les moyens de guidage à la base du chevalet sont avantageusement constitués d'un jeu de roulettes dont certaines, comprenant une gorge centrale, sont montées en sorte que leur gorge roule directement sur les rails du canal de guidage lorsque la paroi mobile se déplace, et d'autres, sans gorge, sont montées à une hauteur inférieure, en sorte que, lors du déplacement de la paroi mobile, elles roulent sous les rails du canal de guidage afin de guider le déplacement de la paroi mobile, d'empêcher l'oscillation de celle-ci vers la baie de déchargement et de centrer l'enroulement du tapis de fond.

Dans une forme d'exécution préférée, les rails sous lesquels roulent les roulettes inférieures sont pourvus, du côté du passage de l'axe de support des roulettes, d'un rebord destiné à guider la roulette parfaitement dans l'axe du rail (par exemple, forme de « J » inversé).

Dans une forme préférée également, les rails de guidage sont disposés de manière partiellement encastrée dans les traverses de la structure de caisse, afin de maximiser la hauteur utile de caisse. Dès lors, une découpe est pratiquée dans les traverses à l'endroit du passage du canal de guidage.

Dans une forme préférée également, la base de la cloison mobile ou du chevalet est pourvue d'un joint racleur en matière relativement dure, épousant le profil des tôles de fond, en sorte que lorsque la paroi mobile se déplace, les résidus éventuellement présents sous le tapis soient poussés vers les vallées du fond puis évacués par les orifices pratiqués dans ces vallées.

Les roulettes, leur nombre et leur position ne sont pas des éléments caractérisants de l'invention. Les moyens de guidage pourraient aussi bien être constitués de patins, d'ergots ou de tout autre dispositif connu de l'homme de métier et autorisant le glissement. Pour des remorques destinées au transport de charges particulièrement lourdes, on pourrait aussi prévoir plus d'un canal de guidage et un nombre supérieur de roulettes inférieures et/ou supérieures.

De même, la liaison de la paroi mobile au tapis est réalisée suivant un dispositif quelconque, du moment que la liaison soit suffisamment solide pour ne pas être arrachée lorsque le tapis doit entraîner la paroi mobile qui subit une pression, certes proportionnellement faible mais néanmoins réelle, de la charge transportée.

L'extrémité opposée du tapis de fond est fixée au moyen d'un dispositif quelconque sur un tambour enrouleur positionné sous la structure de fond de caisse, en retrait de l'extrémité de la caisse située du côté de la baie de déchargement. Ce tambour enrouleur est fixé sur un arbre d'entraînement, lui-même entraîné par un dispositif de puissance chargé d'entraîner la rotation du tambour dans le sens de la traction du tapis.

Le système de puissance d'entraînement du tambour enrouleur, appelé dans cet exposé premier système de puissance, comprend un ou plusieurs engrenages entraînés ensemble ou individuellement soit par un ou plusieurs moteurs hydrauliques ou électriques, soit par le système de puissance mécanique, hydraulique ou électrique du véhicule de traction. Le système de puissance choisi doit autoriser la rotation dans le sens opposé à l'enroulement, lorsque la paroi mobile et le tapis de fond sont retirés vers l'autre extrémité de la caisse pour préparer celle-ci à un nouveau chargement.

Afin d'assister l'enroulement du tapis de fond, en particulier en cas de charge lourde, notamment en vrac et potentiellement compactée par les cahots du roulage au transport, mais aussi de ramener la paroi mobile et le tapis de fond en position de chargement, au moins une chaîne est disposée à l'intérieur du canal de guidage en sorte qu'elle puisse tourner autour de deux pignons disposés respectivement sous chacune des deux extrémités de la caisse au moyen d'arbres transversaux. Cette chaîne n'est pas nécessairement une chaîne sans fin car sa course est limitée à la course du tapis ou de la paroi mobile. Elle est cependant liée à la base de la paroi mobile ou du chevalet de maintien à une de ses extrémités au moyen d'un dispositif de liaison rigide remplaçant l'un ou plusieurs de ses maillons et à l'autre de ses extrémités au moyen d'un tendeur. L'invention prévoit que l'un quelconque des arbres transversaux supportant les pignons précités, choisi de préférence en fonction de l'espace disponible dans la structure de fond, est entraîné par un dispositif de puissance quelconque, appelé dans cet exposé second système de puissance, permettant d'entraîner la rotation de l'arbre et, partant, de la chaîne dans les deux sens. Lors de l'enroulement du tapis pour le déchargement, ce dispositif de puissance actionne la chaîne dans le sens du déplacement du tapis. Ce faisant, la chaîne entraîne avec elle la paroi mobile et donc l'extrémité du tapis opposée à son tambour d'enroulement. En conséquence, le tapis est tiré par ses deux extrémités et le dispositif permet de déplacer et décharger les charges les plus lourdes et les plus compactes, bien entendu dans les limites de la résistance de la structure de la caisse et du châssis avec train roulant qui la supporte.

Le second système de puissance peut être indépendant du premier, tant qu'il est synchronisé avec celui-ci. A titre d'exemple, on peut utiliser deux moteurs hydrauliques alimentés par le même circuit, l'huile s'équilibrant d'elle-même entre le moteur de l'enrouleur et celui de la chaîne suivant la demande de chacun des systèmes.

Le type et le nombre de chaînes, de pignons et de liaisons de la chaîne à la paroi mobile ne sont pas des éléments caractérisants de l'invention. Dans une forme préférée d'exécution, le dispositif comprend une chaîne unique liée à la base du chevalet de maintien et guidage de la paroi mobile au moyen d'une pièce de liaison englobant aussi le ou les axes de maintien des roulettes de guidage inférieures. La puissance d'assistance au déchargement s'exerce ainsi au niveau de l'élément empêchant le basculement de la paroi mobile vers la matière transportée, en sorte que la paroi n'est pas amenée à pousser sur la matière et se confine à son rôle de maintien de la matière.

Après le déchargement, le second dispositif de puissance actionne la chaîne dans le sens opposé en sorte que la paroi mobile et le tapis sont ramenés vers l'extrémité opposée à la baie de déchargement, en position d'attente pour recevoir un nouveau chargement.

### Description de formes d'exécution préférées de l'invention

Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions.

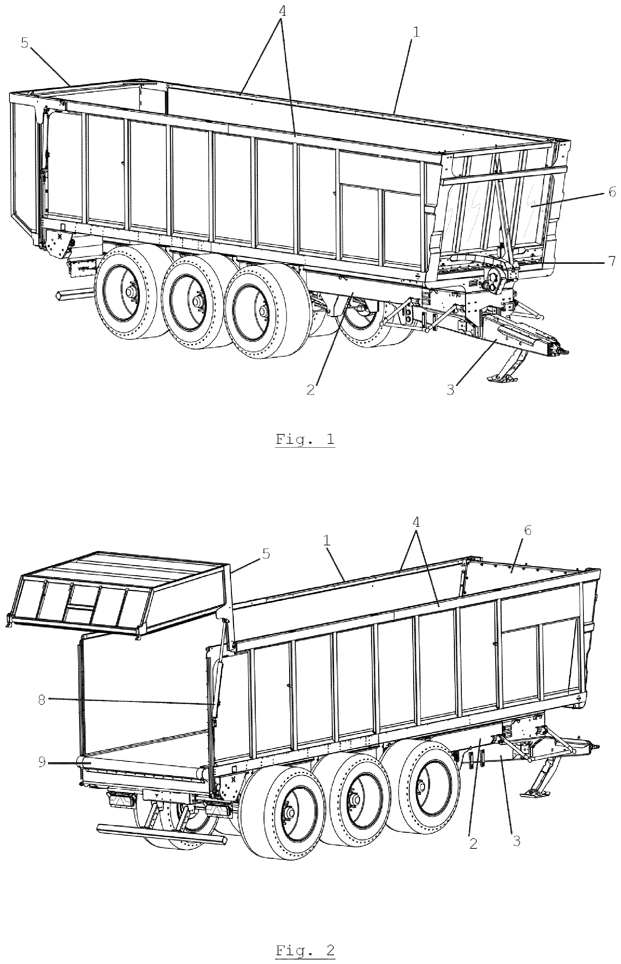

La Figure 1 illustre une phase de travail dans laquelle une remorque de transport selon l'invention, ou plus généralement un moyen de transport selon l'invention, est prêt(e) à être chargé(e). Elle représente une caisse de chargement **1** de cette remorque de transport, selon l'invention, dont on a également représenté le châssis porteur **2** et le timon de traction **3,** deux éléments non pertinents pour l'invention, mais indiquant le sens normal d'avancement de la remorque. La caisse de chargement **1** est composée de parois latérales **4,** d'une porte arrière **5** conçue dans cet exemple comme un caisson de fermeture pivotant à l'arrière des parois latérales **4,** d'une paroi mobile **6** située, dans la position de travail illustrée, entre les extrémités frontales des parois latérales **4,** et d'une structure de fond **7.**

La Figure 2 représente la même caisse de chargement **1,** dans une phase de travail prête pour le déchargement, où la porte arrière **5** a pivoté vers le haut sous l'action de vérins de porte **8,** libérant ainsi une baie de déchargement à l'arrière de la remorque. Le dégagement de la baie de déchargement sur cette Figure 2 laisse entrevoir le tapis de fond **9** disposé sur l'intégralité de la surface de la structure de fond **7.**

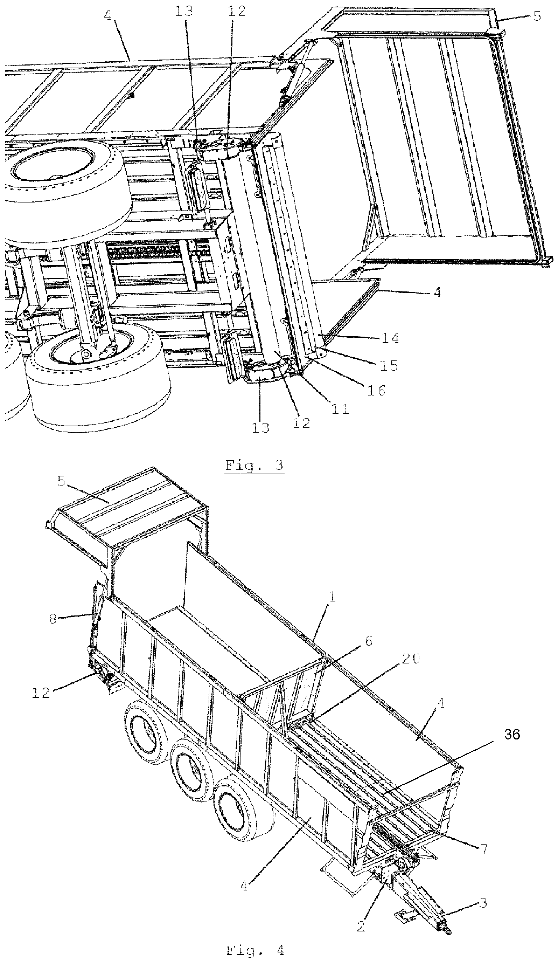

La Figure 3 représente une vue partielle du côté inférieur de la caisse de transport **1,** dans la partie située sous la baie de déchargement arrière. Le tapis de fond **9** s'enroule autour du tambour d'enroulement **11** sous l'action d'un engrenage **12** entraîné par un moteur hydraulique **13.** En pratique, l'exemple d'exécution considéré prévoit un second engrenage **12** et un second moteur hydraulique **13** du côté opposé du tambour d'enroulement **11.** Le dispositif d'enroulement du tapis de fond **9** est avantageusement complété par un tambour de renvoi **14** sous lequel est disposé un racloir **15** monté sur un support **16.**

La Figure 4 représente la caisse de chargement **1** précitée vue du haut, au cours du processus de déchargement. Sous l'action du tambour d'enroulement **11,** non visible sur cette illustration puisque situé sous la caisse de chargement **1,** le tapis de fond **9** se retire vers l'arrière, attirant avec lui la paroi mobile **6,** en même temps que la matière transportée, non représentée. Ce mouvement a pour effet de déverser la matière à l'arrière de la remorque, sans que le dôme de matière transportée ne se déverse vers l'avant de la caisse de chargement **1** puisque la paroi frontale **6** se déplace aussi vers l'arrière. Par rapport à un fond mouvant sans déplacement de la paroi frontale, l'utilisateur gagnera en temps de déchargement, puisqu'il ne doit pas attendre que se décharge la matière retombée dans la partie qui se dégage progressivement à l'avant de la caisse pendant la rotation du fond mouvant. Par rapport aux remorques à paroi frontale poussante, la paroi mobile **6** ne subit qu'une contrainte minimale, équivalente à la pression de la matière qui s'appuie directement sur elle, et non au poids de l'ensemble de la matière contenue dans la caisse de chargement **1.**

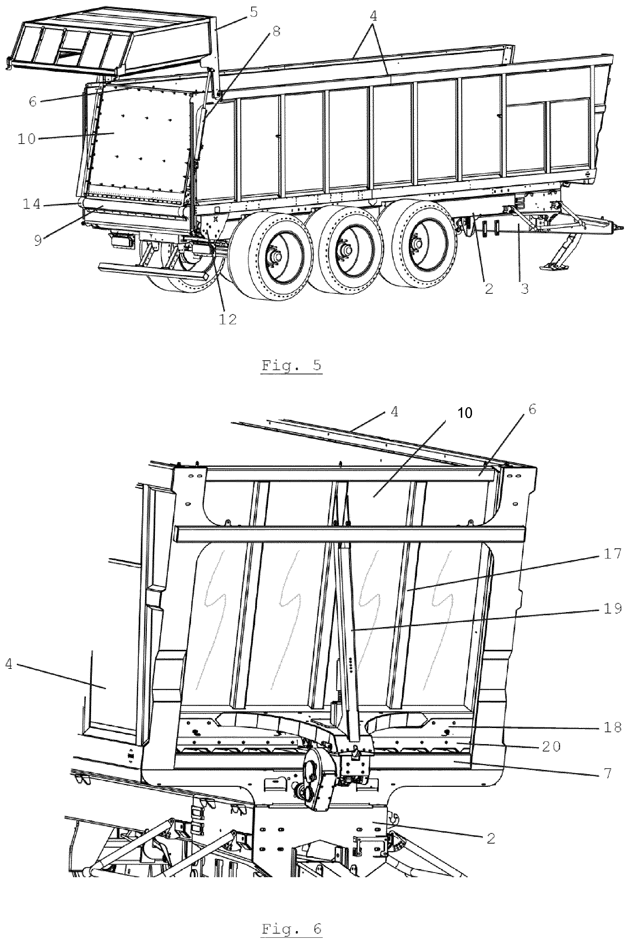

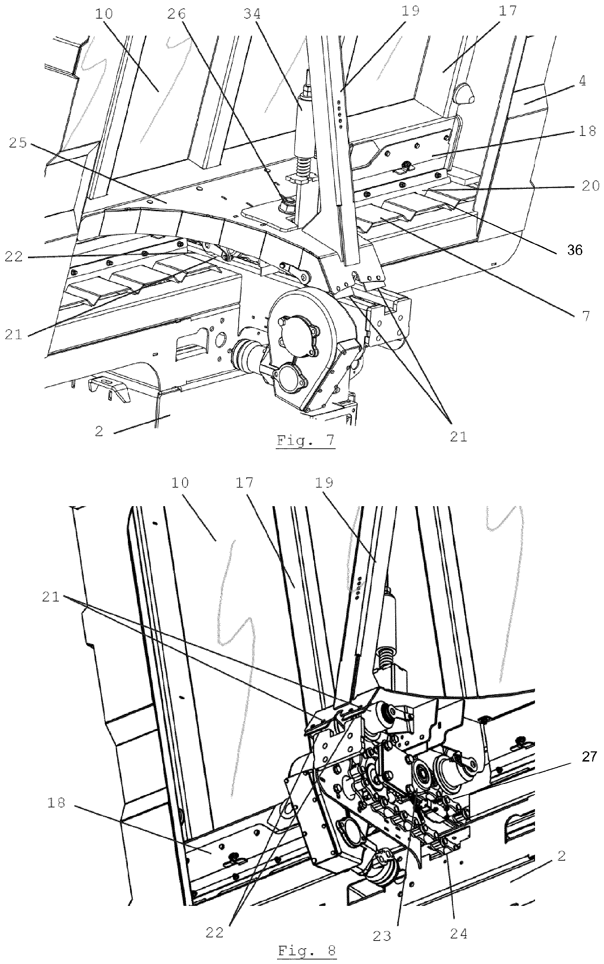

La Figure 4 montre en outre explicitement la structure du fond de caisse **7,** composée d'un ensemble de tôles pourvues de plis formant des vallées **36** (mieux visibles sur la Figure 7), elles-mêmes pourvues d'orifices d'évacuation des résidus éventuels. Cette structure présentant des ouvertures permet un entretien extrêmement aisé de l'intérieur de la caisse de chargement **1** dès lors que le tapis de fond **9** aura été entièrement enroulé sur le tambour arrière **11.** Les matières résiduelles non collantes chutent naturellement sous l'action du racleur **20** situé à la base de la paroi mobile **6** (voir Figures 6 et 7), lors du déplacement de cette dernière, et le liquide auxiliaire, par exemple l'eau d'un nettoyeur à haute pression, suivra le même trajet.

La Figure 5 illustre la fin du processus de déchargement de la caisse de chargement **1.** Le processus d'enroulement du tapis de fond **9** est terminé, la paroi mobile **6** a rejoint l'extrémité arrière, finissant de déverser toute la matière transportée.

La Figure 6 représente une vue rapprochée de la paroi mobile **6** en position par défaut, c'est-à-dire du côté de la caisse de chargement **1** opposé à la baie de déchargement. Dans l'exemple d'exécution illustré, cette position se situe tout à l'avant de la caisse de chargement **1.**

La paroi mobile **6** est composée d'une cloison **17** réalisée ici à l'aide d'une structure composée par exemple d'un cadre renforcé d'une ou plusieurs traverses et couverte d'une plaque **10** réalisée par exemple en polymère thermoplastique transparent (raison pour laquelle les espaces situés entre le cadre et les traverses paraissent vides sur la Figure 6 mais pleins sur la Figure 5) pour ménager au chauffeur du véhicule de traction une visibilité maximale sur la matière transportée. Hormis le caractère transparent de la plaque de couverture **10,** la construction de cette cloison **17** n'est pas un élément caractérisant du brevet, du moment qu'elle soit suffisamment résistante.

La paroi mobile **6** comporte en outre un dispositif de fixation **18** qui la solidarise avec le tapis de fond **9.** A nouveau, la construction de ce dispositif de fixation **18** n'est pas caractérisant, étant entendu qu'il doit être en état d'assurer durablement la traction uniforme de la paroi mobile **6** par le tapis de fond **9.**

La paroi mobile **6** comporte encore un chevalet de guidage et de maintien **19** qui, comme l'indique sa dénomination, est destiné à maintenir la paroi mobile **6** continuellement perpendiculaire aux parois latérales **4,** ce qui aura pour effet secondaire de garantir l'enroulement régulier et en ligne du tapis de fond **9,** et de maintenir la paroi mobile **6** dans l'angle de sa construction, c'est-à-dire de l'empêcher de basculer ou osciller d'avant en arrière et vice-versa sous l'effet de la pression de la charge transportée et/ou de son propre déplacement et/ou de toute autre force prévisible quelconque (vent, prise au vent, etc.).

Une modalité d'exécution possible du dispositif de guidage et maintien du chevalet **19** est explicitée dans les Figures 7 et 8.

En Figure 7, on distingue la structure de fond de caisse **7** et le joint racleur **20** qui en épouse la forme pour évacuer les résidus éventuels par les orifices pratiqués dans les vallées **36** du fond **7.** Un ensemble de roulettes supérieures **21,** au nombre de quatre dans l'exemple d'exécution illustré sans que pareil nombre n'ait valeur caractérisante, est par ailleurs disposé à la base du chevalet de guidage et de maintien **19.** Ces roulettes supérieures **21** sont chacune disposées dans l'axe longitudinal d'un des rails de guidage **22** constituant un canal de guidage **24** et roulent sur ces rails **22** lorsque le tapis de fond **9** et la paroi mobile **6** se déplacent vers la baie de déchargement. Ce dispositif combinant rails de guidage **22** et roulettes supérieures **21** a pour effet de réduire l'effort de traction qui s'exerce sur la paroi mobile **6** lors de son déplacement ainsi que l'effort de pression qui s'exerce sur le tapis de fond **9** lorsqu'il glisse sur la structure de fond **7** pendant son enroulement autour du tambour enrouleur **11.**

La Figure 8 montre en outre un jeu de roulettes inférieures **23,** au nombre de deux dans l'exemple d'exécution illustré sans que pareil nombre n'ait valeur caractérisante, structurellement fixées au chevalet **19** mais dont la position en hauteur correspond à la hauteur de l'intérieur des rails **22,** conçus de manière telle qu'ils réalisent le canal de guidage **24** qui maintient et guide les roulettes inférieures **23.**

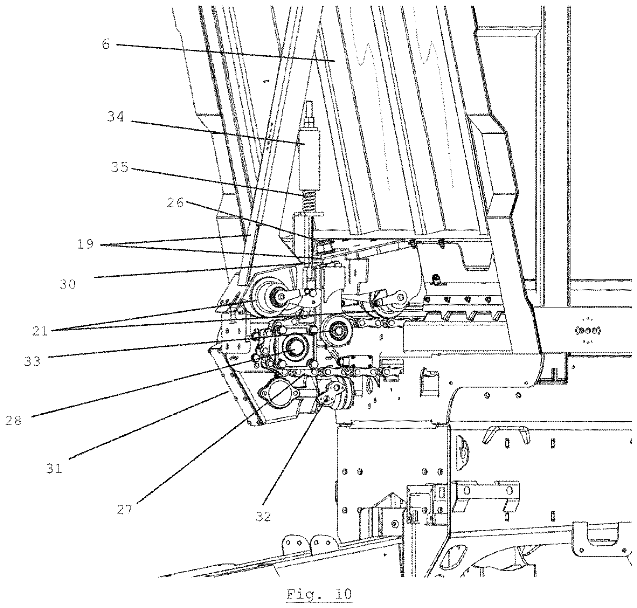

La Figure 7 montre encore un capot de protection **25** disposé au centre de la base du chevalet **19.** Ce capot de protection **25** est destiné à protéger le canal de guidage **24** lorsque la machine est en phase de chargement et/ou de transport : on évite ainsi que de la matière ne se dépose à l'endroit où devront passer les roulettes supérieures **21** centrales et les roulettes inférieures **23** en début de phase de déchargement. Le capot de protection **25** sert aussi à la fixation des roulettes inférieures **23,** fixation complétée par un écrou de réglage **26** (également visible sur la Figure 10) permettant d'ajuster la position verticale des roulettes inférieures **23** par rapport à la hauteur du canal de guidage **24,** ainsi qu'à la fixation du tendeur de chaîne **34.**

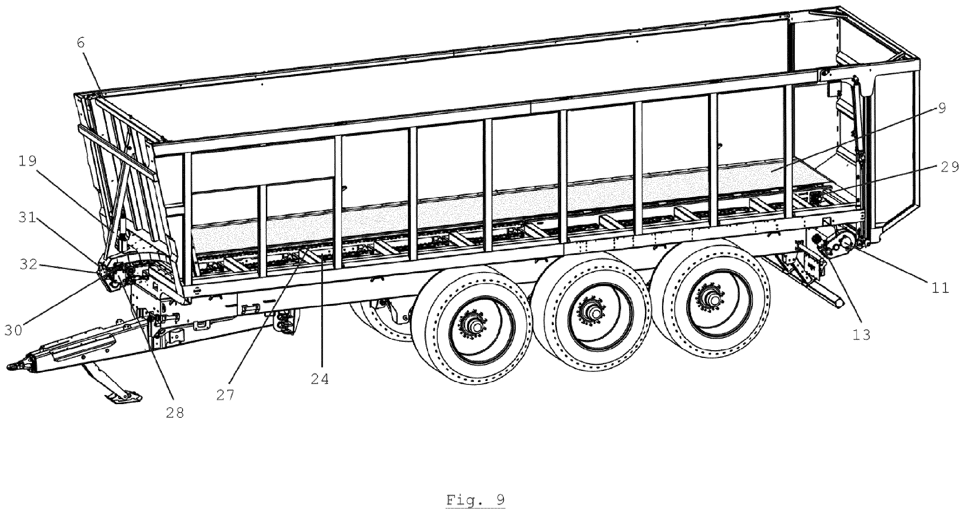

La Figure 9 montre une vue générale écorchée du fond de caisse selon l'invention. Dans le canal de guidage **24** est disposée une chaîne **27** s'étendant autour d'un pignon d'entraînement **28** antérieur et d'un pignon de renvoi **29** postérieur. La chaîne **27** est pourvue d'une pièce de liaison **30** solidarisant la chaîne **27** avec le chevalet **19.** Un engrenage **31** actionné par un système de puissance quelconque, ici un moteur hydraulique **32,** permet de mouvoir la chaîne **27** dans les deux sens. Le système de puissance **32** de la chaîne **27** est synchronisé avec le système de puissance **13** du tambour **11** d'enroulement du tapis **9**, en sorte que les vitesses de déplacement du tapis **9** et de la chaîne **27** soient identiques en phase de déchargement. Au déchargement, la chaîne **27** assiste ainsi le tambour d'enroulement **11** par l'intermédiaire de la pièce de liaison **30,** chacun tirant dans le même sens par une extrémité du tapis **9.** Dans le sens inverse où le tapis **9** et la paroi mobile **6** sont ramenés en position initiale vers l'avant, le système de puissance **13** tourne librement et seul le système de puissance **32** entraîne le tout, la chaîne **27** faisant office de dispositif de rappel par l'intermédiaire de la pièce de liaison **30.**

La Figure 10 montre une vue écorchée de la partie antérieure du canal de guidage **24** et de la base du chevalet **19.** On y distingue deux des roulettes de guidage supérieures **21,** un palier **33** de roulette inférieure **23,** la chaîne **27,** le pignon d'entraînement **28,** l'engrenage **31,** le moteur hydraulique **32,** la pièce de liaison **30,** l'écrou de réglage **26** ainsi que le tendeur de chaîne 34. On voit que la pièce de liaison **30** intègre aussi l'arbre des roulettes inférieures **23,** en sorte que l'axe fileté aboutissant à l'écrou **26** permet à la fois de réaliser la liaison au chevalet **19** et de régler la hauteur des roulettes inférieures **23,** assurant en même temps un maintien de la chaîne **27.**

L'une des extrémités de la chaîne **27** est fixée au tendeur **34,** intégré au chevalet **19,** l'autre extrémité étant fixée à la pièce de liaison **30,** elle-même également fixée au chevalet **19.** Le tendeur **24** permet de compenser l'allongement de la chaîne **27** qui se produit, lorsque celle-ci est mise en mouvement, sous l'effet de la traction exercée par le pignon d'entraînement **28.** En début de cycle de déchargement, l'effort de traction affecte en effet la longueur quasi totale de la chaîne **27,** depuis les maillons situés autour du pignon d'entraînement **28** jusqu'au maillon fixé à la pièce de liaison **30.** Suivant la masse à déplacer, la chaîne **27** peut alors s'allonger de plusieurs centimètres qui seront compensés par l'extension des ressorts **35** du tendeur **34.** Lorsque le pignon d'entraînement **28** entraîne le tapis de fond **9** vers la baie de déchargement, les ressorts **35** du tendeur **34** sont en effet soulagés de la traction de la chaîne **27,** celle-ci n'étant plus soumise à contrainte de traction dans sa portion comprise entre le maillon situé à la sortie du pignon d'entraînement **28** et le maillon fixé au tendeur **34.** Cet allongement de la chaîne **27** diminue au fur et à mesure que le chevalet **19** de la paroi mobile **6** se déplace vers la baie de déchargement, la portion de chaîne **27** soumise à la contrainte de traction diminuant concomitamment.

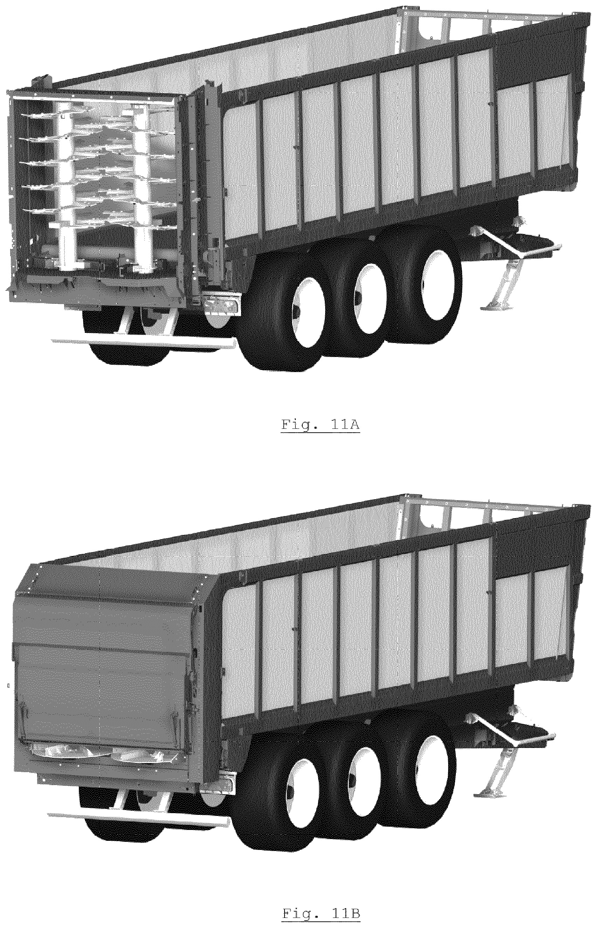

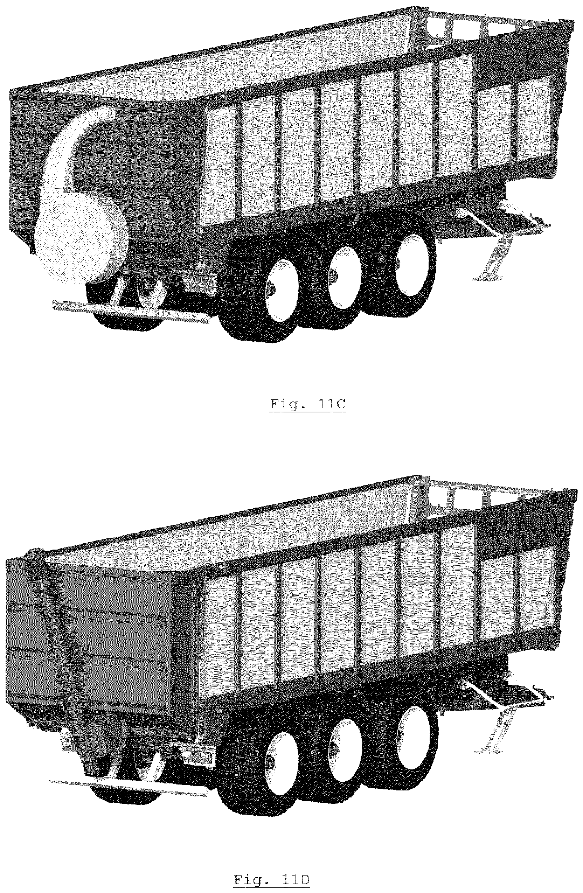

En Figure 11, on a illustré d'autres exemples de mise en oeuvre de l'invention, représentant respectivement :
- en Figure 11A, une application dans le cas d'un épandeur de fumier;
- en Figure 11B, une application dans le cas d'un épandeur à plateaux pour engrais, sel, sable, chaux ou autre matière à structure granuleuse;

- en Figure 11C, une application dans le cas d'une remorque distributrice de fourrage avec turbine de déchiquetage et projection à l'arrière de la remorque;
- en Figure 11D, une application dans le cas d'une remorque de transbordement équipée d'une trémie arrière dirigeant la matière déversée vers une vis sans fin qui la transfère vers un autre engin.

Ces exemples ne sont nullement limitatifs : ils peuvent être étendus aussi loin que l'imagination de l'homme peut adjoindre un ou plusieurs accessoires au dispositif de déchargement.

Nonobstant le fait que la présente invention a été exposée au moyen d'une description détaillée dans laquelle différentes variantes d'exécution et différents aspects de l'invention ont été explicités, l'invention n'est nullement limitée aux exemples présentés ici.

### Liste des repères

- 1.: Caisse de chargement
- 2.: Châssis
- 3.: Timon
- 4.: Parois latérales
- 5.: Porte arrière
- 6.: Paroi mobile
- 7.: Structure de fond de caisse
- 8.: Vérins de porte arrière
- 9.: Tapis de fond
- 10.: Plaque transparente
- 11.: Tambour d'enroulement
- 12.: Engrenage de tambour
- 13.: Moteur hydraulique (1^{er} système de puissance)
- 14.: Tambour de renvoi
- 15.: Racloir
- 16.: Support de racloir
- 17.: Cloison de paroi mobile
- 18.: Dispositif de fixation de la paroi mobile au tapis
- 19.: Chevalet de guidage et maintien
- 20.: Joint racleur
- 21.: Roulettes supérieures
- 22.: Rails de guidage
- 23.: Roulettes inférieures
- 24.: Canal de guidage
- 25.: Capot de protection
- 26.: Écrou de réglage
- 27.: Chaîne
- 28.: Pignon d'entraînement
- 29.: Pignon de renvoi
- 30.: Pièce de liaison
- 31.: Engrenage
- 32.: Moteur hydraulique (2^{ème} système de puissance)
- 33.: Palier de roulette inférieure
- 34.: Tendeur de chaîne
- 35.: Ressort(s)
- 36.: Vallée de fond de caisse

## Revendications

1. Caisse de chargement (1) intégrable à un véhicule de transport principalement destiné aux matières en vrac, comprenant un fond de caisse (7), des parois latérales (4), une baie de déchargement optionnellement munie d'un dispositif obturateur (5), une paroi mobile rigide (6) apte à se déplacer, lors du déchargement, d'une extrémité de la caisse opposée à la baie de déchargement vers cette dernière, un tapis de fond (9) couvrant l'intégralité du fond de caisse (7), fixé d'un côté à la paroi mobile (6) et de l'autre côté à un tambour enrouleur (11) disposé sous la baie de déchargement et entraîné par un premier système de puissance (13), **caractérisée en ce qu'**elle comporte en outre au moins une chaîne (27) avec un pignon d'entraînement (28) et un pignon de renvoi (29), ladite chaîne (27) s'étendant longitudinalement entre son pignon de renvoi (29) placé sur un axe transversal situé sous la baie de déchargement et son pignon d'entraînement (28) placé sur un axe transversal disposé sous l'extrémité opposée de la caisse, ladite chaîne (27) étant liée à la paroi mobile (6) au moyen d'au moins une pièce de liaison (30), permettant l'entraînement de la paroi mobile (6) par un second système de puissance (32) par l'intermédiaire d'un engrenage (31) actionnant le pignon d'entraînement (28), en sorte que ladite chaîne (27) soit apte à entraîner la paroi mobile (6) vers la baie de déchargement de la caisse (1) de manière synchronisée avec l'enroulement du tapis de fond (9) induit par l'action du premier système de puissance (13) entraînant le tambour enrouleur (11).

2. Caisse de chargement (1) selon la revendication 1, **caractérisée en ce que** le second système de puissance (32) est également apte à entraîner ladite chaîne (27) dans le sens de rotation inverse au sens d'enroulement du tapis de fond (9) pour dérouler ce dernier, en vue de ramener de manière synchronisée la paroi mobile (6) et le tapis de fond (9) vers ladite extrémité opposée à la baie de déchargement.

3. Caisse de chargement (1) selon la revendication 1, **caractérisée en ce que** la structure de fond de caisse (7) comprend une ou plusieurs tôles comportant à intervalle régulier des plis formant autant de vallées (36), chacune de ces vallées (36) étant pourvue d'une pluralité d'orifices réalisés dans le fond de vallée.

4. Caisse de chargement (1) selon la revendication 1, **caractérisée en ce qu'**elle comporte un chevalet tridimensionnel (19) de guidage et maintien de la paroi mobile (6), disposé sur le côté de celle-ci non exposé à la charge transportée, s'écartant sur une certaine distance de la paroi mobile (6) et s'étendant sur une certaine largeur à la base de la paroi mobile (6), muni de moyens de guidage comprenant une pluralité de roulettes (21, 23), patins ou ergots tels que lesdits moyens de guidage se déplacent sur ou dans un canal de guidage (24) ménagé dans la structure de fond de caisse (7).

5. Caisse de chargement (1) selon la revendication 4, **caractérisé en ce que** le canal de guidage (24) comprend au moins deux rails de guidage profilés (22) présentant un interstice entre eux et agencés pour que, sur chacun de ces rails, roule une roulette supérieure à gorge (21) et, sous chacun de ces rails, roule une roulette inférieure (23) sans gorge.

6. Caisse de chargement (1) selon la revendication 3, **caractérisée en ce que** la base de la paroi mobile (6) est munie d'un joint racleur (20) épousant le profil du fond de caisse (7).

7. Caisse de chargement (1) selon la revendication 1, **caractérisée en ce que** la géométrie de caisse est conique, c'est-à-dire que l'écart entre les parois latérales (4) s'amenuise à mesure qu'elles s'étendent depuis la baie de déchargement vers ladite extrémité opposée de la caisse.

8. Caisse de chargement (1) selon la revendication 1 ou 7, **caractérisé en ce que** la paroi mobile (6) est garnie de joints synthétiques verticaux semi-souples assurant l'étanchéité de la caisse le long des parois latérales (4), quelle que soit la position de la paroi mobile (6) .

9. Caisse de chargement (1) selon la revendication 1, **caractérisée en ce que** la paroi mobile (6) possède une structure constructive ouverte avec une couverture réalisée en matière polymère thermoplastique transparente.

10. Caisse de chargement (1) selon la revendication 5, **caractérisée en ce que** chaque pièce de liaison (30) supporte également au moins un axe de roulette de guidage inférieure (23).

11. Caisse de chargement (1) selon la revendication 10, **caractérisée en ce que** la chaîne (27) est solidarisée au chevalet tridimensionnel (19) de guidage et maintien de la paroi mobile (6), une première extrémité de la chaîne étant fixée à un tendeur (34) et une seconde extrémité étant fixée à la pièce de liaison (30).

12. Caisse de chargement (1) selon la revendication 10, **caractérisée en ce que** chaque pièce de liaison (30) comporte un dispositif de réglage (26) pour ajuster la position verticale de la ou des roulettes de guidage inférieures (23).

13. Caisse de chargement (1) selon la revendication 1, **caractérisée en ce que** le dispositif obturateur (5) de la baie de déchargement comprend un panneau ou volet mobile, au moins une porte battante ou un caisson basculant ou est complété ou remplacé par un dispositif de déchargement secondaire spécifique de la matière transportée.

14. Caisse de chargement (1) selon la revendication 13, **caractérisée en ce que** le dispositif de déchargement secondaire spécifique de la matière transportée est un système de rouleaux, avec optionnellement assiettes d'épandage, pour la distribution de fumiers, sables, chaux ou autre matière à structure granuleuse, un convoyeur de transbordement pour les récoltes de produits agricoles ou une turbine de projection pour la distribution de fourrage ou déchets verts compostés.

15. Procédé de déchargement d'une caisse de chargement (1) selon l'une quelconque des revendications précédentes, **caractérisé en ce que** le déplacement du tapis de fond (9) vers la baie de déchargement se produit de manière synchronisée à la fois sous l'action d'un premier système de puissance (13) qui enroule le tapis de fond (9) sur le tambour enrouleur (11), ledit tapis (9) entraînant avec lui la paroi mobile (6) qui lui est solidaire, et sous l'action d'un second système de puissance (32) qui entraîne la rotation d'au moins une chaîne (27) liée à la paroi mobile (6) autour d'un pignon (29) situé sous la baie de déchargement de la caisse (1) et d'un pignon (28) situé sous l'extrémité opposée de la caisse (1).

16. Procédé de déchargement selon la revendication 15, **caractérisé en ce que** le rappel du tapis de fond (9) et de la paroi mobile (6) vers l'extrémité de caisse (1) opposée à la baie de déchargement se produit uniquement sous l'action du second système de puissance (32) entraînant la rotation inversée de chaque chaîne (27) liée à la paroi mobile (6) autour de son pignon (29) situé sous la baie de déchargement de la caisse (1) et de son pignon (28) situé sous l'extrémité opposée de la caisse (1).

17. Procédé de déchargement selon la revendication 15, **caractérisé en ce que** l'enroulement du tapis de fond (9) est successivement actionné et stoppé au moyen d'un dispositif de commutation des deux systèmes de puissance précités (13, 32), la vitesse et la distance d'enroulement du tapis de fond (9) étant réglés de manière fine et régulière au moyen d'un dispositif de régulation des deux systèmes de puissance précités (13, 32).

## Patentansprüche

1. Ladekasten (1), der in ein hauptsächlich für Schüttgüter bestimmtes Transportfahrzeug integriert werden kann, mit einer Bodenfläche (7), Seitenwänden (4), einer als Zubehör mit einer Verschlussvorrichtung ausgestatteten Entladungsöffnung (5) und einer starren beweglichen Wand (6), die sich bei der Entladung von einer der Entladungsöffnung entgegengesetzten Seite zu der Entladungsöffnung bewegen kann, einem an einer Seite an die bewegliche Wand (6) und an der anderen Seite an einer sich unter der Entladungsöffnung befindenden Einrolltrommel (11) verbundene und durch ein erstes Leistungssystem (13) angetriebene Bodenband (9) das die Gesamtheit der Bodenfläche (7) abdeckt, **dadurch gekennzeichnet, dass** er ferner mindestens eine Kette enthält (27) mit einem Antriebsrad (28) und einem Umlenkrad (29), welche besagte Kette (27) sich in Längsrichtung zwischen seinem, sich auf einer Querachse unter der Entladungsöffnung befindendem Umlenkrad (29) und seinem, sich unter der dem Kasten gegenüberliegenden Seite befindendem Antriebsrad (28) ausstreckt, welche besagte Kette (27) an die bewegliche Wand (6) durch mindestens ein Verbindungsstück (30) verbunden ist, das den Antrieb der beweglichen Wand (6) ermöglicht durch ein zweites Leistungssystem (32), das das Antriebsrad (28) durch eine Getriebe (31) antreibt, sodass die besagte Kette (27) die bewegliche Wand (6) zur Entladungsöffnung des Kastens (1) synchron mit der durch die Einwirkung des ersten, die Einrolltrommel (11) antreibendem Antriebssystems (13) induzierte Aufwicklung des Bodenbandes (9) antreiben kann.

2. Ladekasten (1) nach Anspruch 1, **dadurch gekennzeichnet, dass** das zweite Leistungssystem (32) ebenfalls besagte Kette (27) in der umgekehrten Drehrichtung der Aufwicklungsrichtung des Bodenbandes (9) antreiben kann, um letzteren abzurollen um die bewegliche Wand (6) und das Bodenband (9) zum besagten, der Entladungsöffnung entgegengesetztem Ende, synchron zurück zu führen.

3. Ladekasten (1) nach Anspruch 1, **dadurch gekennzeichnet, dass** die Struktur der Bodenfläche (7) eine oder mehrere Bleche enthält, die in regelmäßigen Abständen Biegungen umfassen, die gleich soviel Wellen (36) formen, wobei jede dieser Wellen (36) mit einer Vielzahl von Öffnungen im Wellental ausgerüstet ist.

4. Ladekasten (1) nach Anspruch 1, **dadurch gekennzeichnet, dass** er ein zur Steuerung und Festhaltung der beweglichen Wand (6), sich auf der nicht mit der transportierten Ware in Berührung kommende Seite der beweglichen Wand (6) befindende, auf einer gewissen Distanz der beweglichen Wand (6) abweichende und sich auf eine gewisse Breite der beweglichen Wand (6) ausstreckende dreidimensionales Bock (19) enthält, der mit einer Vielzahl von Rädchen (21, 23), Kufen oder Zapfen umfassende Lenkmitteln ausgerüstet ist, wobei besagte Lenkmittel sich auf oder in einem in der Struktur des Bodenflachs (7) vorgesehenen Lenkkanal (24) fortbewegen.

5. Ladekasten (1) nach Anspruch 4, **dadurch gekennzeichnet, dass** der Lenkkanal (24) mindestens zwei, leicht auseinanderstehende Profillenkschienen (22) enthält, die so eingerichtet sind, dass oberhalb jeder dieser Schienen eine gerilltes Oberrädchen (21) rollt, und unter jeder dieser Schienen ein rillenloses Unterrädchen (23) rollt.

6. Ladekasten (1) nach Anspruch 3, **dadurch gekennzeichnet, dass** die Basis der beweglichen Wand (6) mit einer am Profil des Bodenflachs (7) eng anliegender Abschabfuge (20) versehen ist.

7. Ladekasten (1) nach Anspruch 1, **dadurch gekennzeichnet, dass** die Kastengeometrie konisch ist, das heißt, dass der Abstand zwischen den Seitenwänden (4) sich verringert je mehr sie sich von der Entladungsöffnung zu der gegenüberliegenden Seite des Kastens erstrecken.

8. Ladekasten (1) nach Anspruch 1 oder 7, **dadurch gekennzeichnet, dass** die bewegliche Wand (6) mit halbflexibelen, senkrechten Kunstfugen versehen ist, die unabhängig von der Position der beweglichen Wand (6) die Dichtheit des Kastens entlang der Seitenwände (4) gewährleisten.

9. Ladekasten (1) nach Anspruch 1 , **dadurch gekennzeichnet, dass** die bewegliche Wand (6) eine offene Baustruktur mit einer Deckung aus durchsichtigem thermoplastischem Polymer besitzt.

10. Ladekasten (1) nach Anspruch 5, **dadurch gekennzeichnet, dass** jedes Verbindungsstück (30) ebenfalls mindestens eine Achse von einem Unterlenkrädchen (23) stützt.

11. Ladekasten (1) nach Anspruch 10, **dadurch gekennzeichnet, dass** die Kette (27) mit dem zur Steuerung und Festhaltung der bewegliche Wand (6) dreidimensionalem Bock (19) verbunden ist, wobei ein erstes Kettenende an einem Spanner (34) befestigt ist und ein zweites Ende am Verbindungsstück (30).

12. Ladekasten (1) nach Anspruch 10, **dadurch gekennzeichnet, dass** jedes Verbindungsstück (30) ein Einstellungssystem (26) besitzt, um die senkrechte Position der Unterlenkrädchen (23) einzustellen.

13. Ladekasten (1) nach Anspruch 1, **dadurch gekennzeichnet, dass** die Verschlussvorrichtung (5) der Entladungsöffnung eine bewegliche Platte oder Klappe, eine Pendeltür mit mindestens einem Flügel oder einen Kippkasten umfasst, oder durch eine zusätzliche, für das transportierte Produkt spezifische Entladungsvorrichtung vervollständigt oder ersetzt wird.

14. Ladekasten (1) nach Anspruch 13, **dadurch gekennzeichnet, dass** die zusätzliche, für das transportierte Produkt spezifische Entladungsvorrichtung ein, nach Wahl mit Ausbringungstellern, Walzensystem für die Ausbringung von Stalldung, Sand, Kalk oder anderen körnigen Produkten ist, oder ein Überladeförderer für die Ernte von landwirtschaftlichen Produkten, oder eine Streuturbine für die Verteilung von Futter oder kompostierten Grünabfällen.

15. Entladungsvorgang eines Ladekastens (1), gemäß einer der beliebigen vorherigen Ansprüche, **dadurch gekennzeichnet, dass** die Verschiebung des Bodenbands (9) zur Entladungsöffnung synchron geschieht, gleichzeitig durch die Einwirkung eines ersten Antriebssystems (13) dass das Bodenband (9) auf die Einrolltrommel (11) aufrollt, wobei das Bodenband (9) die mit ihm verbundene bewegliche Wand (6) mit sich zieht, und durch die Einwirkung eines zweiten Leistungssystem (32), das den Umlauf von mindestens einer, mit der beweglichen Wand (6) verbundenen Kette (27) um ein, sich unter der Entladungsöffnung des Kastens (1) befindenden Umlenkrades (29) und um ein, sich unter dem entgegengesetzten Ende des Kastens (1) befindendem Antriebsrades (28) antreibt.

16. Entladungsvorgang nach Anspruch 15, **dadurch gekennzeichnet, dass** der Rücklauf des Bodenbandes (9) und der beweglichen Wand (6) nach dem, der Entladungsöffnung des Kastens (1) entgegengesetzten Ende ausschließlich unter Einwirkung eines zweiten Leistungssystem (32) stattfindet, das die umgekehrte Drehrichtung jeder an der beweglichen Wand (6) verbundenen Kette (27) um sein, sich unter der Entladungsöffnung des Kastens befindendem (1) Umlenkrad (29) und um sein, sich unter der entgegengesetzten Ende des Kastens (1) befindendem Antriebsrad (28) antreibt.

17. Entladungsvorgang nach Anspruch 15, **dadurch gekennzeichnet, dass** die Aufwicklung des Bodenbands (9) anhand einer Umschaltvorrichtung beider besagter Leistungssysteme (13, 32) nacheinander betätigt und wieder unterbrochen wird, wobei die Geschwindigkeit und die Einrollentfernung des Bodenbandes (9) anhand einer Regelvorrichtung der beiden Leistungssysteme (13, 32) fein und stufenlos verstellt werden.

## Claims

1. Load carrying body (1), which can be integrated into a transport vehicle mainly intended for bulk material, comprising a bottom floor (7), side walls (4), an unloading bay optionally provided with a shut-off device (5), a rigid movable wall (6) capable to move, during unloading, from one end of the body opposite to the unloading bay towards the latter, a floor belt (9) covering the entirety of the bottom floor (7) fixed on one side to the movable wall (6) and on the other side to a winding drum (11) arranged under the unloading bay and driven by a first power system (13), **characterized in that** it further comprises at least one chain (27) with a drive pinion (28) and a pinion gear (29), said chain (27) extending longitudinally between its pinion gear (29) placed on a transverse axis located beneath the unloading bay and its drive pinion (28) disposed on a transverse axis disposed below the opposite end of the body, said chain (27) being connected to the movable wall (6) by means of at least one connecting piece (30) allowing to drive the movable wall (6) by a second power system (32) through a gear (31) actuating the drive gear (28), so that said chain (27) is capable to drive the movable wall (6) towards the unloading bay of the body (1) on a synchronized way with the winding of the floor belt (9) induced by the action of the first power system (13) which is driving the winding drum (11).

2. Load carrying body (1) according to claim 1, **characterized in that** the second power system (32) is also capable to drive said chain (27) in the direction of rotation opposite to the winding direction of the floor belt (9) in order to unwind the latter, aiming at synchronously bringing back the movable wall (6) and the floor belt (9) to said end opposite the unloading bay.

3. Load carrying body (1) according to claim 1, **characterized in that** the structure of the bottom floor (7) comprises one or more sheets having regularly spaced plies forming as many valleys (36), each of these valleys (36) being provided with a plurality of apertures made in the valley bottom.

4. Load carrying body (1) according to claim 1, **characterized in that** it comprises a three-dimensional trestle (19) for guiding and holding the movable wall (6), placed on the side of the latter not exposed to the transported load, extending over a certain distance away from the movable wall (6), and extending over a certain width at the base of the movable wall (6), provided with guide means comprising a plurality of rollers (21, 23), shoes or lugs such that said guide means move on or in a guide channel (24) provided in the structure of the bottom floor (7).

5. Load carrying body (1) according to claim 4, **characterized in that** the guide channel (24) comprises at least two profiled guide rails (22) having a gap therebetween and arranged so that, on each of these rails, rolls an upper grooved roller (21) and, under each of these rails, rolls a lower grooveless roller (23).

6. Load carrying body (1) according to claim 3, **characterized in that** the base of the movable wall (6) is provided with a scraper seal (20) that matches the profile of the bottom floor (7).

7. Load carrying body (1) according to claim 1, **characterized in that** the body geometry is tapered, i.e. the distance between the side walls (4) decreases as they extend from the unloading bay to said opposite end of the body.

8. Load carrying body (1) according to claim 1 or 7, **characterized in that** the movable wall (6) is provided with semi-flexible vertical synthetic seals sealing the body along the side walls (4) regardless of the position of the movable wall (6).

9. Load carrying body (1) according to claim 1, **characterized in that** the movable wall (6) has an open constructional structure with a covering made of transparent thermoplastic polymeric material.

10. Load carrying body (1) according to claim 5, **characterized in that** each connecting piece (30) also supports at least one pin of a lower guide roller (23).

11. Load carrying body (1) according to claim 10, **characterized in that** the chain (27) is secured to the three-dimensional trestle (19) for guiding and holding the movable wall (6), a first end of the chain being attached to a tensioner (34) and a second end being attached to the connecting piece (30).

12. Load carrying body (1) according to claim 10, **characterized in that** each connecting piece (30) has an adjusting device (26) for adjusting the vertical position of the lower guide roller(s) (23).

13. Load carrying body (1) according to claim 1, **characterized in that** the shut-off device (5) of the unloading bay comprises a movable panel or flap, at least one swinging door or a tailgate or is completed or replaced by a secondary discharge device specific to the transported material.

14. Load carrying body (1) according to claim 13, **characterized in that** the secondary discharge device specific to the transported material is a system of rollers, with optionally spreading plates, for the distribution of manure, sand, lime or other material with a granular structure, a transshipment conveyor for harvested agricultural products or a spreading turbine for the distribution of fodder or composted green waste.

15. A method of unloading a load carrying body (1) according to any of the preceding claims, **characterized in that** the movement of the floor belt (9) towards the unloading bay occurs synchronously both through a first power system (13) which is winding the floor belt (9) around the winding drum (11), said belt (9) pulling with it the movable wall (6) which is fixed to it, and through a second power system (32) which causes the rotation of at least one chain (27) connected to the movable wall (6) around a pinion (29) located under the unloading bay of the body (1) and a pinion (28) located under the opposite end of the body (1).

16. Unloading method according to claim 15, **characterized in that** the return of the floor belt (9) and the movable wall (6) to the end of the body (1) which is opposite to the unloading bay occurs only through the second power system (32) which causes the inverted rotation of each chain (27) connected to the movable wall (6) around the pinion (29) located under the unloading bay of the body (1) and its pinion (28) located under the opposite end of the body (1).

17. Unloading method according to claim 15, **characterized in that** the winding of the floor belt (9) is successively actuated and stopped by means of a switching device of both aforementioned power systems (13, 32), the speed and the winding distance of the floor belt (9) being fine and evenly tuned by means of a regulating device of both aforesaid power systems (13, 32).
